Europäisches Patentamt

European Patent Office

Office européen des brevets

(19)

(11) Veröffentlichungsnummer: **0 189 776**

**A1**

(12) # EUROPÄISCHE PATENTANMELDUNG

(21) Anmeldenummer: 86100375.4

(22) Anmeldetag: 13.01.86

(51) Int. Cl.⁴: **G 01 V 11/00**

(30) Priorität: 24.01.85 DE 3502354

(43) Veröffentlichungstag der Anmeldung:
06.08.86 Patentblatt 86/32

(84) Benannte Vertragsstaaten:
BE DE FR GB IT

(71) Anmelder: INTERATOM Gesellschaft mit beschränkter
Haftung
Friedrich-Ebert-Strasse
D-5060 Bergisch Gladbach 1(DE)

(72) Erfinder: Schult, Norbert
Gibbinghausen 27
D-5203 Much(DE)

(72) Erfinder: Giebel, Günter
Auf'm Steinacker 15
D-5063 Overath 2(DE)

(72) Erfinder: Schmidt, Hans, Dr.
Joh.-Burum-Strasse 16 A
D-5060 Bergisch Gladbach(DE)

(74) Vertreter: Mehl, Ernst, Dipl.-Ing. et al,
Postfach 22 01 76
D-8000 München 22(DE)

(54) **Vorrichtung zur Schwingungsmessung.**

(57) Eine Vorrichtung zur Schwingungsmessung, die mittels eines am Ende einer Meßlanze (3) angebrachten Meßkopfes (4) in eine im zu untersuchenden Bauteil (1) angebrachte Bohrung (2) eingebracht und dort durch Spreizen von Backen (6) verriegelt wird, in denen Meßwertaufnehmer (8) angebracht sind. Das Spreizen der Backen geschient durch das hydraulische oder pneumatische Aufweiten in axialer Richtung eines Faltenbalges (12) und das dadurch mitbewirkte Aneinanderabgleiten von konisch geformten Flächen (15, 16). Da die Backen im Meßkopf (4) federnd (9) aufgehängt sind, sind sie von diesem kinematisch abgekoppelt. Nur ein geringer Teil der Masse der Vorrichtung beeinflußt das Ergebnis der Messung.

FIG 1

EP 0 189 776 A1

0189776

85 P 6704 E

INTERATOM GmbH

D-5060 Bergisch Gladbach 1

## Vorrichtung zur Schwingungsmessung

Die vorliegende Erfindung betrifft eine Vorrichtung zur Schwingungsmessung nach dem Oberbegriff des 1. Anspruchs. Die Anmelderin hat in der DE-A-28 28 541 eine derartige Vorrichtung beschrieben um Schwingungsmessungen an beliebigen Bauteilen, z. B. Kernenergieanlagen vorzunehmen, und zwar auch an schwer zugänglichen Orten; die eigentlichen Schwingungsmeßgeräte, z. B. Beschleunigungsaufnehmer, werden mittels sogenannter Meßlanzen an derartige Orte gebracht und werden durch Federkraft gegen das zu untersuchende Bauteil gepreßt. Dabei sind die Meßwertaufnehmer in einem am einen Ende der Meßlanze angebrachten Meßkopf untergebracht derart, daß sie mit Ausnahme von unstarren Verbindungen (z. B. Kabeln) für die Dauer des Meßvorganges von dem Rest der Vorrichtung trennbar sind. Die Betätigung der in der genannten Druckschrift beschriebenen Vorrichtung erfolgte ausschließlich mit Hilfe mechanischer Mittel.

Aufgabe der vorliegenden Erfindung ist eine verbesserte Ausgestaltung einer Vorrichtung der oben beschriebenen Art dahingehend, daß durch den Einsatz pneumatischer bzw. hydraulischer Elemente eine genauere Dosierung der Anpreßkraft der Beschleunigungsaufnehmer an die zu untersuchende Struktur ermöglicht wird. Ferner soll auch bei möglicherweise nicht genau zentrischer Anordnung derselben in der zu ihrer Aufnahme bestimmten Bohrung eine gleichmäßige Abstützung der eigentlichen Meßvorrichtung möglich sein. Die Vorrichtung soll auch so ausgestaltet sein, daß zwischen ihr und der zu untersuchenden Struktur eindeutig definierte,

22.01.85 We/Bt

d. h. linienförmige oder/und flächenförmige Berührungen, zustandekommen.

Die Lösung dieser Aufgabe erfolgt durch die im kennzeichenden Teil des 1. Anspruchs angegebenen Mittel. Durch gegenseitiges Aneinanderabgleiten der hierfür vorgesehenen Flächen werden die Backen symmetrisch zueinander gespreizt und mit gleichmäßigem, einstellbarem Anpreßdruck an der Wand der Bohrung zur Anlage gebracht. Der Faltenbalg und die Backen können verhältnismäßig leicht ausgeführt werden, so daß die durch sie zusätzlich eingebrachte Masse im Verhältnis zu derjenigen des zu untersuchenden Bauteils so gering ist, daß ihr Einfluß auf das Meßergebnis vernachlässigbar klein bleibt. Neben den bekannten geometrischen Gründen, die dafür sprechen, drei um jeweils 120$^{\circ}$ zueinander versetzte Backen zu verwenden bietet diese Anordnung darüberhinaus die Möglichkeit, in jeder derselben einen getrennten Meßwertaufnehmer unterzubringen, wobei diese zur Messung z. B. von Beschleunigungen in jeweils unterschiedlichen Richtungen, z. B. der x-, der y- oder der z-Richtung eingerichtet sind.

Die im 2. Anspruch vorgeschlagene Ausgestaltung der Erfindung erleichtert nach beendeter Messung und Entlastung des Faltenbalges das Zurücktreten der Backen in die Kontur des Meßkopfes, was für die Möglichkeit seiner störungsfreien Entfernung aus der Meßbohrung von Bedeutung ist.

Die im 3. Anspruch vorgeschlagene Ausgestaltung der Erfindung dient neben der Aufhängung der Backen ihrer radialen und azimutalen Zentrierung.

In besonderer Ausgestaltung dieses Gedankens gemäß dem 4. Anspruch ist die von diesen Federn ausgeübte Kraft einstellbar.

Dank der im 5. Anspruch vorgeschlagenen Ausgestaltung der Erfindung kommt es zwischen den Backen und der Wand der Bohrung zu genau definierten linien- oder flächenförmigen Berührungen.

Ein Ausführungsbeispiel der Erfindung ist in der Zeichnung dargestellt, und zwar zeigt
Figur 1 den eigentlichen Meßkopf im Längsaxialschnitt entsprechend den Linien I-I der Figuren 2 und 3,
Figur 2 einen Querschnitt entsprechend der Linie II-II der Figur 1 und
Figur 3 einen Querschnitt entsprechend der Linie III-III der Figur 1.

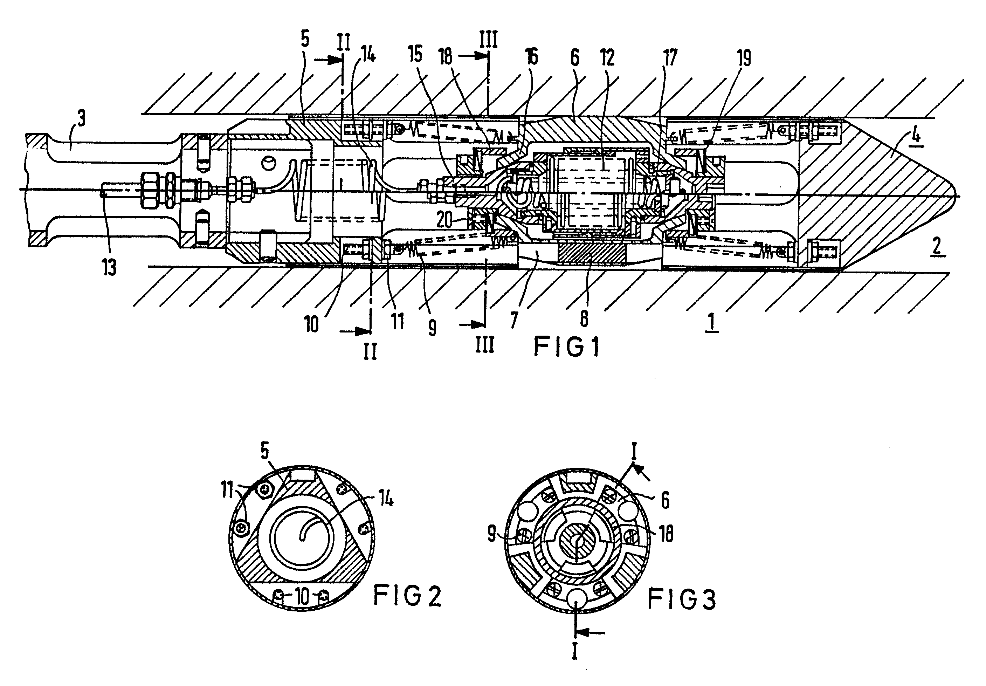

In einem beliebigen, nicht näher beschriebenen Bauteil 1, dessen Schwingungsverhalten untersucht werden soll, ist eine zylindrische Bohrung 2 angebracht, die nur über einen größeren Zwischenraum, z. B. von mehreren Metern hinweg, erreichbar ist. Von einer zugänglichen Stelle aus wird mit Hilfe einer Meßlanze 3 ein Meßkopf 4 in die Bohrung 2 eingebracht, wobei der äußere Durchmesser des Meßkopfes 4 um ein geringes hinter demjenigen der Bohrung 2 zurückbleibt. Dieser Zustand ist in der unteren Hälfte der Figur 1 dargestellt. Der Meßkopf 4 besteht aus einem starr mit der Meßlanze 3 verbundenen, mit drei gleichmäßig über den Umfang verteilten Schlitzen versehenen Gehäuse 5. Bei der am unteren Ende der Meßlanze angebrachten Ausführung ist diese konisch zugespitzt. In den Schlitzen sind radial bewegbare Backen 6 angeordnet, deren jede mit einer Vertiefung versehen ist, in die ein Meßwertaufnehmer 8 eingeschoben sein kann. Die Backen 6 sind mittels Spiralfedern 9 am Gehäuse 5 aufgehängt. Die Federn 9 sind an ihrem anderen Ende an Bolzen 10 befestigt, die mittels Muttern 11 in ihrer gewünschten Lage in Bezug auf das Gehäuse 5 fixiert

85 P 6904 E 0189776

werden können; hierdurch ist eine Einstellung der Vorspannung der Federn 9 möglich. Im Inneren des Gehäuses 5 ist ein Faltenbalg 12 angeordnet, der über eine Leitung 13 mit einem unter Druck stehenden Fluid gefüllt werden kann, wodurch er sich in axialer Richtung ausdehnt. Um die nötige Elastizität zwischen dem Faltenbalg 12 und dem starr in der Meßlanze 3 untergebrachten Teil der Leitung 13 herzustellen, ist letztere auf einem Teil ihrer Länge als elastische Spirale 14 ausgeführt. Der Faltenbalg 12 schließt an seinen beiden Enden an kegelig ausgeführte, starre Teile 15 an. Steht der Faltenbalg 12 unter Druck, so daß er sich gelängt hat, wie im oberen Teil der Figur 1 dargestellt, so drücken die kegelig geformten Teile 15 über die den Backen entsprechend hohlkegelig oder eben angeformte Flächen die Backen auseinander, bis sie am Bauteil 1 zum Anliegen kommen. Wird der Faltenbalg 12 entlastet, so zieht er sich (unterstützt durch eine in seinem Inneren angebrachte Rückholfeder 17) wieder zusammen. Die Backen 6 folgen dieser Bewegung und treten wieder in die Kontur des Meßkopfes 4 zurück, da auf ihre ebenfalls kegelig geformten Außenseiten 16 an beiden Seiten je ein Zentrierring 18 wirkt, der entweder fest mit der Einstellschraube 20 verbunden ist oder, wie dargestellt, durch Anbringung je einer weiteren Feder 19 in axialer Richtung belastet die Rückstellkraft erhöhen kann. Dabei kann die Vorspannung der Federn 19 mit Hilfe der Einstellschrauben 20 eingestellt werden. Wie aus der Figur 3 ersichtlich, sind die Backen 6 an ihrer Außenkontur so gestaltet, daß diese Kreisbögen bilden, deren Radius größer ist als derjenige der Bohrung 2. Die Berührung zwischen den Backen 6 und der Wand des Bauteils 1 erfolgt dann nicht flächig, sondern auf genau definierten Linien.

0189776

85 P 6704 E

Zur Erleichterung ihrer gegenseitigen Bewegung werden die Oberflächen der Teile 15 und 16 zweckmäßigerweise mit einem Gleitmittel, beispielsweise auf Basis von Molybdändisulfid versehen.

Auf eine Darstellung der zu den Meßwertaufnehmern führenden, durch die Meßlanze 3 nach außen geführten Meßleitungen wurde der besseren Übersichtlichkeit halber verzichtet.

D-5060 Bergisch Gladbach 1


Vorrichtung zur Schwingungsmessung


Patentansprüche


1. Vorrichtung zur Schwingungsmessung mit einem in eine Bohrung (2) einbringbaren Meßkopf (4) mit radial spreizbaren Backen (6) zum Verspannen in derselben, g e k e n n z e i c h n e t   d u r c h  folgende Merkmale:

a) Einen axial angeordneten, von innen mit einem unter Überdruck stehenden Fluid beaufschlagbaren Faltenbalg (12), der an seinen Enden mit kegelig ausgestalteten Gleitflächen (15) versehen ist,

b) Zur Aufnahme eines Meßwertaufnehmers hergerichteten, in Ausnehmungen des Meßkopfgehäuses (5) geführten Backen (6), die an ihrer Innen- und Außenseite mit dazu passenden, hohlkegelig oder eben, bzw. kegelig ausgestalteten Gleitflächen (16) versehen sind,

c) Axial in Richtung auf ein Zusammenwirken der Backen (6) federbelasteten (19) an deren äußeren Gleitflächen (16) anliegenden Zentrierringen (18) und Einstellschrauben (20).


2. Vorrichtung nach Anspruch 1,
d a d u r c h   g e k e n n z e i c h n e t ,
daß der Faltenbalg (12) mit einer Rückholfeder (17) versehen ist.


3. Vorrichtung nach Anspruch 1 oder 2,
d a d u r c h   g e k e n n z e i c h n e t ,
daß die Backen (6) an axialen, an ihrem geweils anderen Ende am Meßkopfgehäuse (5) befestigten Federn (9) aufgehängt sind.

4. Vorrichtung nach Anspruch 3,

d a d u r c h   g e k e n n z e i c h n e t ,

daß Einrichtungen (10, 11) zum Spannen der Federn(9) vorhanden sind.

5. Vorrichtung nach Anspruch 1,

d a d u r c h   g e k e n n z e i c h n e t ,

daß die Außenkontur der Backen(6) aus Kreisbögen besteht, deren Radius größer ist als derjenige der Bohrung (2).

FIG1

FIG2

FIG3

1/1     85 P 6704     C189776

Europäisches
Patentamt

**EUROPÄISCHER RECHERCHENBERICHT**

Nummer der Anmeldung

EP 86 10 0375

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | US-A-4 185 704 (NIXON)<br>* Spalte 4, Zeilen 28-44; Figur 4 * | 1 | G 01 V 11/00 |
| | --- | | |
| A,D | EP-A-0 006 426 (INTERATOM)<br>* Zusammenfassung; Figuren 1-3 * | 1 | |
| | ----- | | |
| | | | **RECHERCHIERTE SACHGEBIETE (Int. Cl.4)** |
| | | | G 01 V<br>E 21 B |

Der vorliegende Recherchenbericht wurde für alle Patentansprüche erstellt

| Recherchenort<br>DEN HAAG | Abschlußdatum der Recherche<br>29-04-1986 | Prüfer<br>ANDERSON A.TH. |
|---|---|---|